(19) **Europäisches Patentamt / European Patent Office / Office européen des brevets**

(11) **EP 1 579 380 B1**

(12) **EUROPEAN PATENT SPECIFICATION**

(45) Date of publication and mention
of the grant of the patent:
**29.08.2007 Bulletin 2007/35**

(51) Int Cl.:
*G06K 19/06* (2006.01)   *B42D 15/10* (2006.01)
*G07D 7/00* (2006.01)   *G02B 5/30* (2006.01)

(21) Application number: **03769846.1**

(22) Date of filing: **17.11.2003**

(86) International application number:
**PCT/IB2003/005193**

(87) International publication number:
**WO 2004/055720 (01.07.2004 Gazette 2004/27)**

(54) **AUTHENTICATION SYSTEM WITH VISUAL ENCRYPTION USING POLARISATION OF LIGHT**

AUTHENTIFIZIERUNGSSYSTEM MIT OPTISCHER VERSCHLÜSSELUNG UNTER VERWENDUNG VON POLARISIERTEM LICHT

SYSTEME D'AUTHENTIFICATION A CRYPTAGE VISUEL FAISANT APPEL A UNE POLARISATION LUMINEUSE

(84) Designated Contracting States:
**AT BE BG CH CY CZ DE DK EE ES FI FR GB GR HU IE IT LI LU MC NL PT RO SE SI SK TR**

(30) Priority: **16.12.2002 EP 02080308**

(43) Date of publication of application:
**28.09.2005 Bulletin 2005/39**

(73) Proprietor: **Koninklijke Philips Electronics N.V.**
**5621 BA Eindhoven (NL)**

(72) Inventors:
• **KEVENAAR, Thomas, A., M.**
**NL-5656 AA Eindhoven (NL)**
• **TUYLS, Pim, T.**
**NL-5656 AA Eindhoven (NL)**
• **SCHRIJEN, Geert, J.**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**EP-A- 0 753 785       WO-A-01/55960**

• MOIA, FRANCO: "New coloured optical security elements using Rolic's LPP/LCP technology: devices for 1st to 3rd level inspection" PROCEEDINGS OF SPIE, OPTICAL SECURITY AND COUNTERFEIT DETERRENCE TECHNIQUES IV, vol. 4677, 18 April 2002 (2002-04-18), pages 194-202, XP002273603 San Jose US ISSN: 0277-786X
• MOIA F ET AL: "OPTICAL LPP/LCP DEVICES: A NEW GENERATION OF OPTICAL SECURITY ELEMENTS" PROCEEDINGS OF THE SPIE, SPIE, BELLINGHAM, VA, US, vol. 3973, 27 January 2000 (2000-01-27), pages 196-203, XP008003043 ISSN: 0277-786X
• MOIA, FRANCO: "Brand new protection using Rolic's new LPP/LCP security devices" ROLIC RESEARCH LTD. ON PIESEC , 28 - 30 October 2002, pages 1-5, XP002273604 Dublin

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 579 380 B1

**Description**

The invention relates to an authentication system including a plurality of optical authentication devices and at least one inspection device. The invention also relates to an optical authentication device. The invention also relates to a method of hiding a first image in a first image.

EP 1120737 and "New coloured optical security elements using Rolic's LPP/LCP technology: devices for 1st to 3rd level inspection" by F. Moia, published in Proceedings of SPIE, Optical Security and Counterfeit Deterrence Techniques IV, 4677 describe optical security devices for applying to or incorporating in commercial items. Such items are found principally in the fields of document security (banknote, stamp, card and tickets applications), brand protection (pharmaceuticals, flavors, liquors), secure packaging of articles, software, spare parts for vehicles, etc., or packaging therefor. The optical security devices may be used for authenticating articles to which they are applied. A first type of such device comprises holograms, kinograms, watermarks, micro-perforations, optical variable inks, etc. Such devices can be inspected with the naked eye (first level inspection) and provide an authentication, having regard to the difficulty a counterfeiter would have in providing a similar device.

A second type of such security device provides a greater degree of security or authentication than the first type and is viewable with a cheap and easily available tool, for example, a polarizer sheet, a magnifying glass, a black lamp (UV), etc (second level inspection). Examples of such security elements are micro-printing devices, fluorescent inks, and devices based on polarization effects. Such devices may, for example, be based on photo-oriented polymer network (PPN) layer, which is disposed on a substrate and is selectively oriented in different directions in different local regions over its surface. The PPN layer is covered by a layer of cross-linked liquid-crystal monomers; this layer, which is optically anisotropic and exhibits birefringence provides an optical retarder layer. The liquid crystal nature of the retarder layer follows the selective orientation of the PPN layer to enable the manufacturing of phase retarder images which may be seen with the aid of polarizer sheets.

A third type of security device comprises elements which can be visualized or detected only with special, expensive tools such as photo-spectrometers, polarizing microscopes, etc. (third level inspection). In addition, electronic techniques are known for inserting, and subsequently identifying, watermarks in an image or totally encrypting an image. Further examples for such security devices are elements made with special fluorescent inks, digital scrambled indicia. All these devices have in common that they can only be received with special decrypting tools.

In order to provide comprehensive and multipurpose security, the optical security device comprises a substrate, and at least a first optically structured layer which is such as to provide first, second and third optical inspection levels. The first layer is constructed as a retarder plate of LCP material, having an array of elemental areas having different predetermined orientations. The resulting viewable objects created by such a phase retarder depends on the polarization directions and spectral wavelength distribution of the in and out-coming light. Adjacent areas of the structured LCP retarder layer show from one area to the other at least two different orientations of their optical axes into which at least an encrypted and optionally at least a non-encrypted hidden image is stored. The non-encrypted hidden information/ images or objects - if present - can be visualized with a normal sheet polarizer (second inspection level). In addition a "randomized" distribution of patterns can be seen. The encrypted images can be discerned with a decrypting optical tool as mentioned above (third inspection level). To this end, an appropriately structured optical phase retarder plate, the decrypter or key, is placed between the linear polarizer and the optical device and a second, otherwise encrypted object becomes visible. The key has been chosen such that when use in combination with the second level object and pattern the otherwise encrypted object is revealed.

It is an object of the invention to provide an improved authentication systemand an improved optical authentication device. It is a further object to provide an improved method of hiding an image in another image.

This object is realized by means of an authentication system according to claim 1. To meet the object of the invention, an authentication system including a plurality of optical authentication devices and at least one inspection device; each optical authentication device including an optical layer including a representation of a first image visually encrypted under control of an encryption key, where the encrypted first image uniquely identifies the respective authentication device; the inspection device being operative to decrypt the optical layer of the optical authentication device under control of the encryption key and to visualize the first image to enable verification of the unique identification of the authentication device.

According to the invention, the encrypted image uniquely identifies the authentication device. In this way, removing an optical layer from a first authentication device and attaching it to a second authentication device will not authenticate the second authentication device, since decryption of the optical layer will not reveal the identity of the second authentication device.

The optical layer includes a further image viewable through a polarization filter. The first image is visually encrypted (hidden) into the further image and is only visible after visual decryption.

The embedding is achieved by assigning a first rotation value based on the pixel value of the second image and adjusting this based on the pixel value of the first image and rotation prescribed by the encryption key for the cell.

By using a relatively small adjustment compared to rotation values assigned to pixels of the second image, the second image remains easily visible with only a polarization filter. By using adjustments close to a multiple of 90 degrees also a well visible second image can be obtained, only inverted in some cases.

As described by the measure of the dependent claim 2, the unique identification is achieved by using an image that is unique for the authentication device. For example, the image may include a unique serial number of the device.

As described by the measure of the dependent claim 3, the image is unique by representing biometrical data of a user of the device. Preferably, the biometrical data includes a photograph of the user to enable quick visible verification by a human using the inspection device.

The measure of the dependent claim 4 describes rotation values that achieve good results for a black and white second image.

The measure of the dependent claim 5 describes values for adjusting that rotation that give good results for a black and white first image.

As described in the measure of the dependent claim 6, the unique identification is achieved by using an encryption key that is unique for the authentication device.

As described in the measure of the dependent claim 8, the inspection device uses an LCD layer for decryption. Such a layer can easily be loaded with the decryption key and is particularly convenient if no fixed key is used.

As described in the measure of the dependent claim 7, the second image identifies the encryption key used for hiding the first image. By depolarizing the second image, the key is identified. By using the identified key to decrypt the second image, the device can be authenticated.

As described in the measure of the dependent claim 9, instead of optically decrypting the second image, the image is loaded into a processor, decrypted, and displayed to a human for visual verification. Such a form of inspection may be faster, and more accurate. The processor may also compare the decrypted image with a reference image and perform the authentication. The processor may also automatically retrieve a suitable key, for example based on information retrieved from the second image.

As described in the measure of the dependent claim 10, the adjustment of the rotation can be much smaller if the decryption is performed by a processor. It could for example also be close to 90 degrees or multiples hereof. Consequently, the second image will be clearer when viewed through a polarizer. In principle, the decrypted second image will be less clear, but the processor can easily compensate for this.

As described in the measure of the dependent claim 11, the first and second images are linked in a verifiable way. Since it is difficult to fraud the encryption, the link makes it also difficult to replace the first image with a fraudulent image, enhancing the security.

As described in the measure of the dependent claim 12, the link is based on the identity of a user of the authentication device.

As described in the measure of the dependent claim 13, the second image includes readable information, such as a name, associated with the identity of the user, enabling easy verification by a human.

To meet the object of the invention, an optical authentication device according to claim 14 includes an optical layer (622) including a representation of a first image visually encrypted under control of an encryption key, where the encrypted first image uniquely identifies the authentication device. The optical layer includes a further image viewable through a polarization filter. The first image is visually encrypted (hidden) into the further image and is only visible after visual decryption.

The embedding is achieved by assigning a first rotation value based on the pixel value of the second image and adjusting this based on the pixel value of the first image and rotation prescribed by the encryption key for the cell.

To meet the object of the invention, a method according to claim 15 is provided.

These and other aspects of the invention are apparent from and will be elucidated with reference to the embodiments described hereinafter.

In the drawings:

Fig. 1 shows an original image, two shares obtained by visually encrypting the original image and a reconstructed image obtained by superimposing the two shares;

Fig.2 illustrates the visual cryptography process as devised by Naor and Shamir;

Fig.3 schematically shows the construction of a liquid crystal display;

Fig.4 gives a schematic implementation of a reconstruction of black-and-white images by superposition of two rotation layers;

Fig.5 shows the visual encryption technique for gray-scale and color images;

Fig.6 shows the authentication system according to the invention;

Fig.7 illustrates a passport as authentication device;

Fig.8 schematically illustrates hiding a first image into a second image;

Fig.9 shows a second image and hidden first image; and

Fig. 10 shows an automatic inspection system.

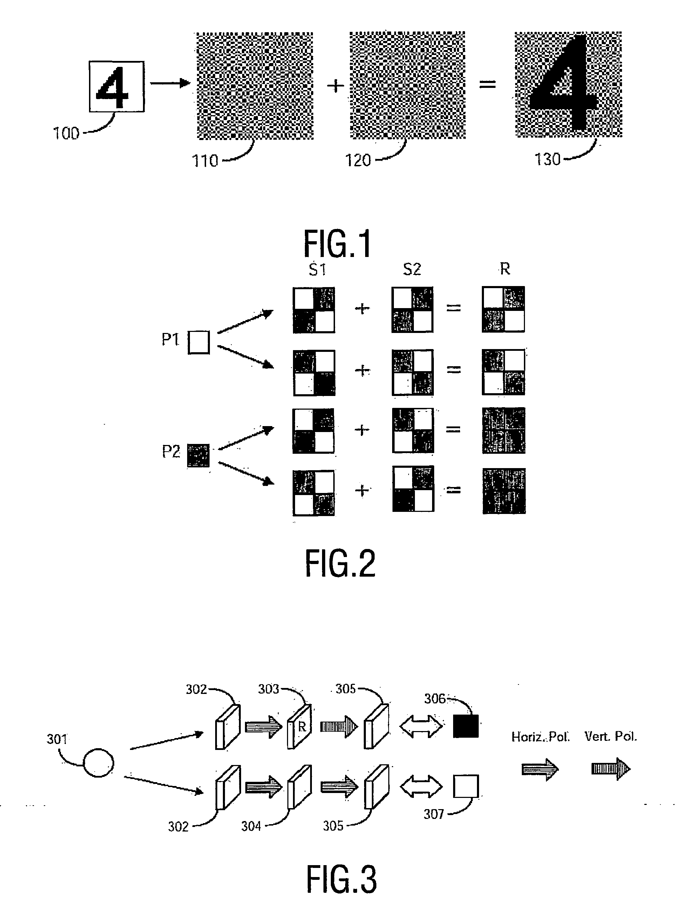

To describe the system according to the invention, first a description of visual encryption is given. Visual cryptography (M. Naor, A. Shamir: Visual Cryptology, Eurocrypt '94, Springer-Verlag LNCS Vol.950, Springer-Verlag, 1995, ppl-12) can briefly be described as follows. An image is split into two randomized parts, the image plus a randomization and the randomization itself. Either part contains no information on the original image because of the randomization. However, when both parts are physically overlaid the original image is reconstructed. An example is given in Fig. 1: original image 100 is split into shares 110 and 120, which when overlaid result in reconstructed image 130. If the two parts do not fit together, no information on the original image is revealed and a random image is produced. Visual encryption has been used for communication between parties. If two parties want to communicate using visual cryptography, they have to share the randomization. A basic implementation would be to give a receiving party a transparency containing the randomization. The sender would then use this randomization to randomize the original message, and transmits the randomized message to the receiver, on a transparency or by any other means. The receiver puts the two transparencies on top of each other and recovers the message. This scheme can be compared to a one-time pad. A more flexible implementation is obtained when using two display screens, e.g. two LCD screens. A first screen displays the image plus randomization and a second screen displays the randomization itself. If the screens are put on top of each other, the reconstructed image appears.

Fig. 2 illustrates the visual cryptography process as devised by Naor and Shamir in the above-referenced paper. The process is illustrated here for a single pixel, but of course every pixel in the source image is to be processed in this way. Every pixel of the original image 100 is translated to four sub-pixels. To generate the first share S1 for this pixel, two of the four pixels are randomly chosen to be black (non-transparent) while the other two are chosen to be white (transparent). To generate the other share S2 of this pixel the four sub-pixels are copied if the corresponding pixel in the original image was white and they are inverted if the original pixel was black. For each pixel a new random choice of which two of the four pixels should be black (non-transparent) needs to be made. The number of sub-pixels into which the pixels are split can be chosen arbitrarily, but should be at least two. This way, two collections of sub-pixels are formed. These collections make up the two shares. Neither of the shares gives any information on the color of the original pixel. In all cases, some of the sub-pixels chosen to represent the original pixel in either of the shares are black and the rest is white. Further, all possible combinations of black and white are equally likely to occur, since the random choice is made with a probability of $p=0.5$, independently for each pixel.

To reconstruct the original image, the two shares S and S2 are to be superimposed, i.e. put on top of each other. This is shown in the last column (R) of Fig. 2. If the original pixel were black (P2), then the superposition of the sub-pixels from shares S1 and S2 will result in four black sub-pixels. If the original pixel where white (P1), then the superposition of the sub-pixels from shares S 1 and S2 will result in a black and white pattern in the reconstructed image 130, which often appears to be gray when seen from a distance. If the two parts do not fit together no information on the original image is revealed and a random image is produced. Without knowing both of the shares, the probability that one set of sub-pixels corresponds to a white pixel in the original image 100 is equal to the probability that that set corresponds to a black pixel in the original image 100.

In the above scheme, in order to show the same level of detail in the reconstructed image 130, the shares 110, 120 require a four times higher resolution than the original image 100. This makes the reconstructed image 130 four times as large as the original image 100. The not pre-published European patent application, PHNL020121, EP application number 02075527.8 corresponding to WO 03/06 7797 describes using a first LCD layer to produce the first share and a second LCD layer to produce the second share. By overlaying the LCDs the original image is visible. In this system, the resolution is not increased. This patent application describes various ways of using LCD layers in combination with polarizers and reflectors for visual encryption. These techniques can be used in the system according to the invention.

In order to understand the use of liquid crystal displays for visual cryptography, first consider the construction of a common transmissive liquid crystal display (LCD) in a backlight setting, as shown in Fig. 3. A light source 301, typically realized as a backlight positioned behind the LCD screen, projects light waves with all possible polarizations towards a polarization filter 302. Only horizontally polarized light waves pass through this polarization filter 302. The liquid crystal cells 303, 304 normally rotate the polarization of the light waves passing through them over a certain angle, usually $[0, \pi/2]$ or $[0, \pi/4]$ depending on the construction of the liquid crystal display and the voltage applied to the cells 303, 304. The cells 303, 304 in this embodiment are twisted nematic liquid crystals, which is the most common type. Other types could of course be used instead. Also, rather than using a backlight, a reflective or transflective liquid crystal display could be used. If a sufficient voltage is applied to the liquid crystal cells, the inner molecular structure of the cell changes in such a way that the polarization of passing light is altered by a particular amount. In Fig. 3, a voltage has been applied to liquid crystal cell 304, but not to liquid crystal cell 303. To indicate that liquid crystal cell 303 rotates the polarization of passing light, it has been marked with the letter "R". For the sake of clarity, the rotation effected by liquid crystal cell 303 is shown in Fig.3 as $\pi/2$ or 90 degrees, although the rotation can in this case be any amount between 0 and $\pi/2$.

The light waves that passed through liquid crystal cells 303, 304 subsequently cross a second polarization filter 305. This polarization filter 305 acts like polarization filter 302 in that it only allows horizontally polarized light waves to pass through. Because the polarization of the light that passed through liquid crystal cell 303 had been rotated, this light is blocked by the polarization filter 305, and so the output will appear as a black pixel 306. The polarization of the light that passed through activated liquid crystal cell 304 is still horizontal, and so it passes through polarization filter 305 and appears as a white pixel 307. Alternatively, the second polarization filter 305 could be chosen to let only light through that has been rotated once by the liquid crystal cell 303. The output of the liquid crystal display will then be exactly opposite to what has been described above. However, this is a mere design variation.

It will be evident that the polarization filters 302 and 305 could also be modified to only allow light waves with other polarizations, e.g. vertical polarizations, to pass through. Furthermore, the liquid crystals 303, 304 might not rotate the polarization of incoming light perpendicular to its original orientation, but for instance rotate it only 45 degrees, as is the case in reflective LCDs, where in addition only a single polarization layer may be present. What is important is that, to produce a black pixel, the final direction of the polarization is perpendicular to the polarization direction of the second polarization filter 305.

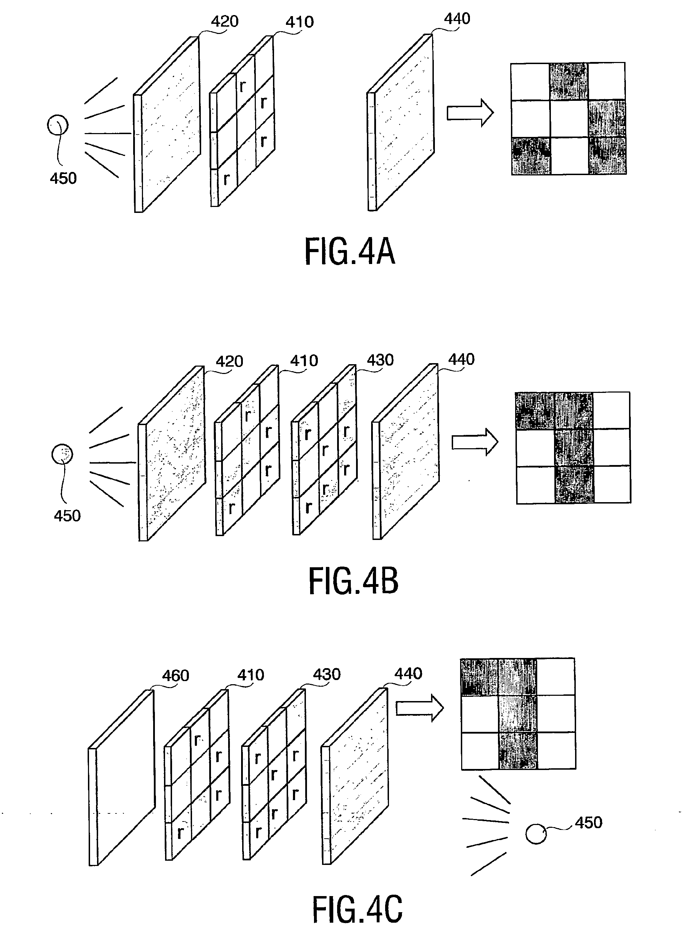

Fig.4 gives a schematic implementation of a reconstruction of black-and-white images by superposition of two rotation layers. The layers may be formed by liquid crystals but may also be formed using suitable optical layer materials, such as transparencies like the ones described in EP 1120737. In the remainder, the description will focus on using liquid crystals. Cells in the optical layers that are indicated with an 'r' rotate the polarization of light by $\pi/2$ radians. As described above, an LCD display consists of three main parts: a bottom polarizer, an LC layer (i.e. optical layer) and a top polarizer. The optical layer is subdivided into small cells. The polarizers act as filters. They project the polarization of the incoming light into one direction (e.g. horizontally). The LC cells rotate the polarization of the incoming light depending on whether a voltage is applied to the cells or not. Using other optical layer material, such as transparencies, the cell rotation may be fixed at manufacturing of the layer. The visual crypto system consists of the following components: a first rotation layer 410 with a polarizer 420 on the bottom but not on top and a second rotation layer 430 with a polarizer 440 on top but not on the bottom. Incoming light from the light source 450 (e.g. backlight) contains light waves with all possible polarizations (circularly polarized light) that lie in the plane perpendicular to the propagation direction of the light beam. Since a horizontal polarizer is placed in front of the first rotation layer 410, the light is horizontally polarized after this filter. The rotation layers are divided in cells or pixels and some of them (indicated by 'r' in Fig. 4) rotate the polarization of the incoming light by $\pi/2$ while the other cells do not change the orientation of the polarization (binary system). For LC rotation layers this depends on whether a voltage has been applied to the cell or not. Finally, the last polarizer 440 blocks light with a vertical polarization resulting in black and white pixels in the output. Whereas in Naor-Shamir visual cryptography overlaying the shares behaves like an OR-function, in the current set-up it behaves like an XOR.

The distribution of the rotating and non-rotating cells in the two rotation layers 410 and 430 form the shares of the original image. The two shares are generated similarly to Naor-Shamir visual cryptography: for every pixel in the original image a cell in the second rotation layer 430 is chosen randomly as rotating ('r') or not rotating. The rotation of the corresponding cell in the first rotation layer 410 is chosen such that if the original pixel was black then the total rotation of the polarization induced by the two corresponding cells of both layers is $\pi/2$. If the original pixel was white the total rotation of then the polarization should be 0 or $\pi$.

In this approach, one cell in the liquid crystal displays corresponds to one pixel in the original image. Hence, the individual shares have the same resolution as the original image. Furthermore, a white pixel in the original images is also white in the reproduced image (and not 'gray' as with Naor-Shamir visual cryptography). Similarly, a black pixel is reproduced as a black pixel and thus there is no loss of contrast and brightness in the reproduced image. Using a liquid crystal layer as an optical rotation layer has as an advantage that the shares can be dynamically updated, as an LCD display is driven by electronic circuitry. There is no need to carry a pile of transparencies.

Fig.4A shows a construction with a single rotation layer. Such a construction may be used in the authentication device according to the invention. The authentication device includes at least an optical layer including the rotation layer 410. The authentication device may also include the bottom polarizer 420. The inspection device includes the second rotation layer 430, that forms the visual encryption key. The inspection device may also include the second polarizer 440. If so desired, the inspection device may also include the first polarizer 420, where the authentication device only includes the rotation layer 410 and is inserted in the location as shown in Fig. 4B. Fig.4C shows reflective inspection. The reflective layer 460 may be in the authentication device behind the rotation layer 410. It may also be part of the inspection device, where the rotation layer 410 of the inspection device is inserted in between. In this case only one polarizing filter 440 is used, through which the light passes twice. The rotation caused by the rotation layer should be half to obtain the same result, compensating for the fact that the light passes twice through the layers.

Gray scales and colors

The use of active LC layers also allows to reconstruct images with gray scales and colors. The liquid crystal layers in Fig. 4 can rotate the polarization over an arbitrary angle within a certain range, say [0; $\pi/2$] or [0; $\pi$], depending on the construction of the LC and the applied voltage over an LC cell. If the total amount of rotation introduced by LC1 and LC2 is $\alpha_1$, and $\alpha_2$ , respectively, then the total rotation equals

$$\alpha = \alpha_1 + \alpha_2 \qquad (1)$$

Denoting by $I_r \in [0,1]$ the normalized intensity of a reconstructed pixel, it follows that

$$I_r(\alpha) = \cos^2 \alpha = \cos^2(\alpha_1 + \alpha_2). \qquad (2)$$

Thus, by choosing an appropriate value for $\alpha$ or $\alpha_1$ and $\alpha_2$ it is possible to change the intensity (gray scale) of a pixel and this is what happens in standard LCDs. In order to implement visual cryptography using gray scales, the shares of a pixel will consist of rotations $\alpha_1$ and $\alpha_2$ which are implemented by voltage distributions applied to the different LC layers. The value $\alpha_2$ is chosen randomly from [0; $\pi$] and $\alpha_1$ is chosen such that the intensity $I_r$ of the reconstructed pixel approximates the intensity $I_0$ of the original pixel.

Eq. (2) gives the reconstructed intensity $I_r$ as a function of the total rotation $\alpha$. Since $\alpha_2$ is chosen in [0; $\pi$], $\alpha_1$ has to belong to the interval [0; $\pi$] due to the $\pi$-periodicity of $I_r$. This construction guarantees that no information is leaked when an attacker obtains $\alpha_1$ or $\alpha_2$. Assuming that $\alpha_1, \alpha_2 \in [0, \pi]$, then $\alpha1$ can be determined by the following Algorithm 1:

$$\text{INPUT: } I_o \in [0,1], \alpha_2 \in_R [0,\pi]$$

$$\text{OUTPUT: } \alpha_1 \in [0, \pi] \text{ such that } \cos^2(\alpha_1 + \alpha_2) = I_o$$

1) compute $\arccos\left(\left|\sqrt{I_o}\right|\right)$; $\eta \in_R \{x, \pi - x\}$

2) if $\eta$-$\alpha2$ < 0, the return $\alpha1 = \eta$-$\alpha2$+ $\pi$, exit

3) if $\eta$-$\alpha2$ $\geq$0, the return $\alpha1 = \eta$-$\alpha2$+ $\pi$

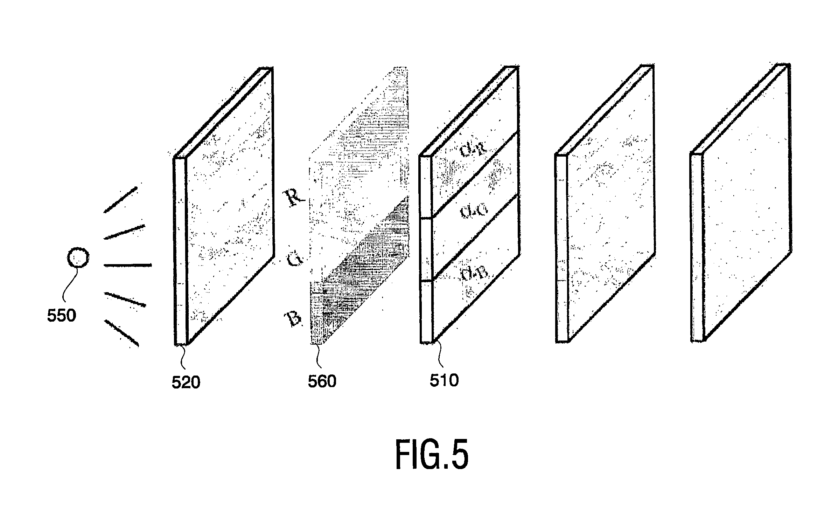

The idea of gray scales described above can be extended to colors. Fig.5 illustrates that one color pixel is built from three sub-pixels each of which has a different color 'backlight' (Red, Green and Blue) by applying a color filter 560 to backlight 550 that has been polarized by a filter 520. As with gray scales, the intensity of each of the colors can be changed individually by changing the rotations $\alpha_R$ ; $\alpha_G$ and $\alpha_B$ of the red, green and blue color respectively using a rotation layer 510. In this way, any color can be composed. By applying Algorithm 1 three times per pixel, once for R, G and B, respectively, we can implement a color visual cryptography system, without losing resolution in contrast to Naor-Shamir visual crypto systems.

In a practical implementation, a pixel intensity can not have any value in [0; 1] but is limited to a discrete set of e.g. k = 256 distinguishable values. Again, the possible values for $\alpha_1$ and $\alpha_2$ have to be chosen such that by observation of $\alpha_1$ no information on the pixel intensity or color is revealed. A set of k possible values for $\alpha_1$ and $\alpha_2$ is given by:

$$\alpha_1 = j\pi / k$$

$$\alpha_2 = i\pi / k + \Delta,$$

with $i, j \in \{0,...,k-1\}$. Due to the symmetry of $\cos^2 x$ around $\pi/2$, an offset $\Delta \in (0, \pi/(2k))$ is needed in order to obtain k different intensities.

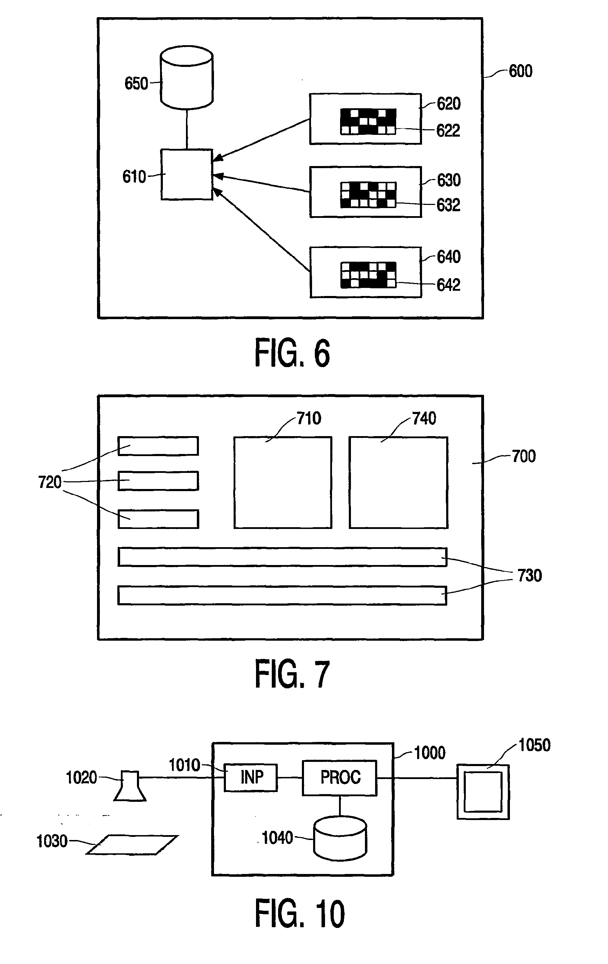

Fig.6 shows the authentication system 600 according to the invention. The system includes a plurality of optical authentication devices, shown are 620, 630 and 640. Each optical authentication device includes an optical layer 622, 632, 642. In principle, the authentication device can be any material object able to carry an optical layer. The invention will explained in more detail with reference to a passport. It will be understood that the invention is not in any way limited to passports. The optical layer includes a representation of a first image visually encrypted under control of an encryption key. The encrypted image is shows as a pattern of black and white pixels in the figure. As will be understood from the description given above of visual encryption, that without decryption the image will appear as a random pattern. According to the invention, the encrypted first image uniquely identifies the respective authentication device. Referring to Fig.4, the authentication device includes at least the optical layer 410, and optionally the polarizer 420. The system further includes at least one inspection device 610. The inspection device is operative to decrypt the optical layer of the optical authentication device under control of the encryption key. As such the inspection device can visualize the first image to enable verification of the unique identification of the authentication device. Referring to Fig.4, the inspection device includes at least the optical layer 430 that represents the encryption key. Typically, the inspection device will also include the polarizer 440. If the authentication device does not include polarizer 420, the inspection device may include this.

In a preferred embodiment, the encryption is made unique by using a first image that is unique for the optical authentication device and/or user of the authentication device. Fig.7 shows a passport 700 as an authentication device according to the invention. The passport typically includes a photo 710 of the user of the passport that can be inspected by a human without any optical devices. The passport usually also includes textual information, 720, such as name, place of birth, date/year of birth, validity period, etc. The passport also includes a unique passport identification code 730, in human readable for and/or computer readable form. To make the encryption unique for the optical authentication device, the first image may include a representation of such a code. Decryption of the first image using the inspection device 610 will reveal the representation. To increase security, the representation may also be encrypted using conventional (non-visual) encryption of the passport identification. A malicious party then has to break the conventional encryption as well as the visual encryption to be able to generate a fraudulent passport that can pass the visual inspection. Using computer databases may further reduce the chance of successful fraud by registering any detected misuse of identification.

Preferably, the first image is unique for the user of the authentication device. This enables an inspector to further verify the authenticity by checking it with the user of the device. Preferably, the first image represents biometrical data, such as a photograph, fingerprint or iris scan, of a user of the authentication device. The first image may be a purely direct visual representation of such biometrical data, e.g. a photo of a face, iris, or fingerprint. It may also be a computer generated visual representation, e.g. a visual representation of important points in the fingerprint. Fig. 7 shows the optical area 740 embedding the first image. Advantageously, the area embeds a photograph of the user. The photo may be the same as photo 710. However, to decrease the chance of breaking the visual encryption key, it is preferred to use another photo, e.g. taken at the same time from a different angle. This will enable a human operator to instantly verify authenticity of the passport.

In the following embodiments a method is described of embedding and encrypting the first image into a second image. The second image is easily visible through a polarizer, whereas the first image is only visible after visual decryption. It will be appreciated that this method of hiding a first image in a second image can be used in the system described above, where the encrypted first image is unique for the authentication device. However, the method can also be used for other applications, e.g. where the encryption outcome does not need to be unique.

HIDING INFORMATION IN POLARIZED IMAGES

A method is described of hiding information, such as text or graphical data, in the form of a first image in a second image. The second image is constructed using polarized pixels and can be retrieved using a normal polarizer. The hidden information, however, can only be retrieved when a special polarizer (for example an LCD display or special transparency) is used. In this sense the approach can be seen as a watermark which can be detected without electronic means. A possible application is that of authenticity verification of official documents, such as passports. As described above, Visual Cryptography (VC) can be used to split an image into two randomized shares: the image plus a randomization and the randomization itself. When both shares are physically overlaid the original image is reconstructed. In the VC approach, either share contains no information on the original image and is just a completely random pattern. The method uses a first and a second image. The first image will be split into two shares using VC. One of the shares will be embedded in the second image. This second image can then be reconstructed using a normal polarizer, the first (hidden) image can only be reconstructed if the other share of the first image (the key) is known. The method can be seen as adding a noisy pattern (a watermark) to this existing image. The watermark is not detected by electronic means but simply be overlaying the image with a special device containing the proper key.

The images are represented using separate cells of the optical layer. The encryption key describes for each cell of the area a rotation of a polarization of light. The inspection device applies the rotation prescribed by the encryption key to light passing through each cell of the area to reveal a representation of the first image. The first image is visually encrypted into the second image by for each cell of the area determining a rotation of a polarization of light passing through the cell in dependence on:

- a pixel value of a corresponding pixel of the second image,
- a pixel value of a corresponding pixel of the first image, and
- a rotation prescribed by the encryption key for the cell.

Preferably, for each cell of the area the rotation is determined by:

- assigning the corresponding pixel of the second image a distinct rotation value depending on an intensity of the pixel; and
- adjusting the rotation value with a positive or negative rotation depending on a pixel value of first image and the encryption key.

As will be illustrated below for black-and-white image (or more general two color-value images), preferred distinct rotation values are 0° and 45° using a reflective authentication device, where light passes twice through the rotation layer 410. In this case the bottom polarization filter 420 is replaced by a mirror (or reflector) and the inspection device passes light from the other side through polarization filter 440. Due to the reflector, the light passes both layers 410 and 440 twice. Using a non-reflective authentication device (with backlight), the preferred distinct rotation values are 0° and 90°. In this case, the inspection device applies polarization filters 420 and 440 and a polarization layer 430 to decrypt the first (embedded) image. Preferred adjustment values for two color-value images are approximately plus or minus 30°, as will be described in more detail below.

The method will be illustrated further for black-and-white images (i.e. two color-value images). Persons skilled in the art will be able to apply the invention to multilevel images (e.g. gray levels) based on the description presented above for gray-scales and colors. The second black-and-white image is implemented according to the approach as depicted in Fig.4A: every white pixel is constructed by a cell in the rotation layer rotating the incoming light over 0 radians and a black pixel by a cell rotating the light over $\pi/2$ radians. The first black-and-white image represents information in the form of text or graphical data. To facilitate explanations, it is assumes that both images have the same size and the same number of pixels (in general it is sufficient if there is a reasonable overlap). The purpose is to embed this first image in the second image in a visually encrypted manner.

As with normal VC, the first image is split into two shares: one share contains a random pattern (the key) and the other share contains the image plus the randomization (the encrypted image). The key is formed by assigning randomly to each pixel a polarization rotation of $\pi/6$ or $-\pi/6$. This choice for the rotations gives good intensities for reconstructed white and black pixels but, depending on the applications, other choices can be made.

Embedding the encrypted first image into the second image is done according to Table 1. Given the pixel color in the first and second image as well as the rotation in the key, the table gives the rotation for the second image including the embedded first image.

Table. 1

|  | 1 st image | | | |
|  | White pixel | | Black pixel | |
|  | Rotation in key | | Rotation in key | |
|  | $-\pi/6$ | $\pi/6$ | $-\pi/6$ | $\pi/6$ |
| 2nd image white pixel | $\pi/6$ | $-\pi/6$ | $-\pi/6$ | $\pi/6$ |
| 2nd image black pixel | $\pi/2-\pi/6$ | $\pi/2+\pi/6$ | $\pi/2+\pi/6$ | $\pi/2 -\pi/6$ |

It can be seen in the last row of Table 1 that through the embedding process a black pixel in the second image is now realized as a rotation of $\pi/2 +/- \pi/6$ and consequently the reconstructed intensity of a black pixel changes from 0 to $\cos^2(\pi/2 +/- \pi/6) = 0.25$ if a set-up is used as in Fig. 4A. Likewise, the intensity of a white pixel changes from 1 to 0.75 i.e. the contrast in the reconstructed first image is reduced. On the other hand, using a set-up as in Fig. 4B where the second rotation layer contains the key, the first image is reconstructed. White pixels have intensity 1 or 0.75 while black pixels have intensity 0 or 0.25.

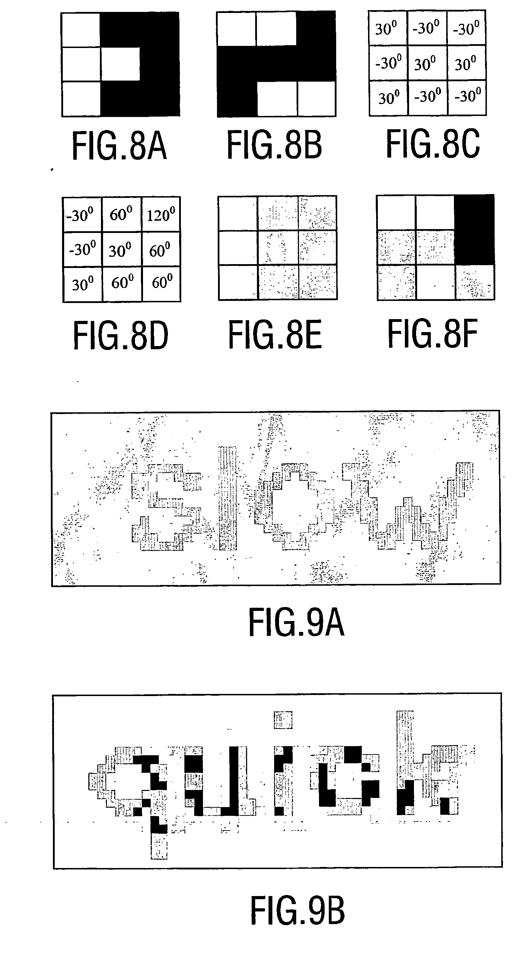

Fig.8 shows a schematic example of the hiding of the first image into the second image. Fig.8A shows the second image. Fig. 8B shows the first image. The images are represented as nine cells (3x3). Fig. 8C shows the rotations prescribed for each respective cell by the encryption key. Fig.8D shows the resulting rotations of the cells as embedded in the rotation layer of the authentication device. This represents the second image with embedded first image. Fig.8E shows the reconstructed second image using the reconstruction shown in Fig.4A. Fig.8F shows the reconstructed first image using Fig.4B, where rotation layer 430 is the key, in the inspection device.

Fig.9 illustrates a more practical example of hiding information. The second image contains the string 'slow' while the first (or hidden) image is the string 'quick'. The figure gives the reconstruction of both images.

IMPLEMENTATION AND APPLICATION

From the explanation above it is clear that there are two shares. One share contains the two images using pixels with rotations of $-\pi/6$, $\pi/6$, $\pi/3$ and $2\pi/3$ while the second share (the key) contains pixels with rotations $-\pi/6$ and $\pi/6$. Although in many applications these rotations are achieved using active liquid crystal cells this is not always necessary: it is possible to 'freeze- in' patterns of rotation in a special transparency. This makes it possible, for example, to use the first share as part of a document. The second share can then be an LCD containing the key or also a transparency to read out the hidden message.

As described above, a possible application lies in applying the method for passports. The second image is the main page of the passport containing the normal information such as name and photograph. At a routine check this image can be reconstructed using a normal polarizer. The first image, with preferably the same size as the first image, again contains the photograph at an arbitrary location. The white space in the second image is filled up using a random pattern. This image can only be reconstructed using the key and the photograph in the second image can be compared with the photograph in the first image. This approach creates a threshold for replacing the photograph because it is technologically difficult to make the special transparency with a different polarization rotation for every pixel. Moreover, because the key is not known to the counterfeiter it is difficult to embed the visually encrypted new photograph in the passport.

In an alternative embodiment, the encrypted second image is made unique for the authentication device by performing the encryption under control of an encryption key that is unique for the authentication device. To this end the system 600 includes a storage 650 for storing for each authentication device the associated encryption key. The inspection device 610 can retrieve for each authentication device the associated encryption key from the storage. Preferably, the second image of the authentication device includes information that identifies the respective unique encryption key. This information may, for example, be an identifier indicating the key. By inspecting the image through a polarizer, the identification can be seen. The indicated decryption key can be retrieved and applied. The decrypted image can then be inspected.

In a preferred embodiment, the inspector device includes an LCD layer with a plurality of LCD cells arranged to co-operate with the cells of the area. The inspection device can set each cell of the LCD according to a rotation prescribed by the encryption key for a corresponding cell of the area. This makes it very easy to use multiple keys.

In another preferred embodiment the storage 650 can be omitted, by printing a unique code on each authentication device. From this code (which can for example be an encrypted version of the key), the inspection device can deduce the appropriate key with which the first (embedded) image can be reconstructed.

Inspection can be performed by a human, using suitable optical layers, such transparencies or LCD layers. In a preferred embodiment, the inspector device is incorporated into or connected to a computer, as illustrated in Fig.10. The computer 1000 includes an input 1010 for loading the encrypted first image obtained from the authentication device 1030 through an input device 1020 that may be part of the inspection device. The input device may, for example, be a camera or scanner able to distinguish between rotations of the cells. Decryption is then done electronically (and not visually), where a processor, under control of a suitable program, loads the decryption key (e.g. from a storage 1040) and decrypts the loaded encrypted first image for subsequent rendering of the decrypted first image on a display 1050. The display may also be part of the inspection device. Decryption is simple. Applying a polarizer, the second image can be recognized, as shown in Fig. 8E. Since also the decryption key is known, table 1 can be used to reconstruct the first image. It will be appreciated that the adjustment of the rotation can now be different, e.g. less than 10° (or 90° or 180° more than this) as long as the input device can still recognize the second image.

In a preferred embodiment, the second and first images are linked by a verifiable association. This may, for example, be based on an identity of a user of the authentication device. To this end, the second image represents readable information, such as name, user identity number, or identity number of the authentication device, that is associated with an identity of the user, whereas the first image may represent biometrical data of the user.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The words "comprising" and "including" do not exclude the presence of other elements or steps than those listed in a claim. The invention can be implemented by means of hardware comprising several distinct elements, and by means of a suitably programmed computer. Where the system/device/apparatus claims enumerate several means, several of these means can be embodied by one and the same item of hardware. The computer program product may be stored/ distributed on a suitable medium, such as optical storage, but may also be distributed in other forms, such as being distributed via the Internet or wireless telecommunication systems.

**Claims**

1. An authentication system (600) including a plurality of optical authentication devices (620, 630, 640) and at least one inspection device (610);
the inspection device (610) being operative to:

   decrypt the optical layer (622, 632, 642) of the optical authentication device (620, 630, 640) under control of a corresponding encryption key and thereby to visualize a first image to enable verification of a unique identification of the authentication device (620, 630, 640) and
   apply a polarization to the optical layer (622, 632, 642) to enable viewing of the representation of a second image, the first image only being visible after visual decryption, the authentication system (600) **characterized in that**

   each optical authentication device (620, 630, 640) includes an optical layer (622, 632, 642) including:

   a representation of a first image visually encrypted under control of an encryption key, where the encrypted first image uniquely identifies the respective authentication device (620, 630, 640) and
   a plurality of polarized cells representing a second image;

   wherein for each cell of the optical layer (622, 632, 642) the rotation is determined by: assigning the corresponding pixel of the second image a distinct rotation value depending on an intensity of the pixel; and adjusting the rotation value with a positive or negative rotation depending on a pixel value of first image and the encryption key, such that the second image can still be visualized by means of a normal polarizer whereas the first image can only be retrieved by applying the encryption key.

2. A system (600) as claimed in claim 1, wherein the first image is unique for the optical authentication device (620) and/or user of the authentication device (620).

3. A system (600) as claimed in claim 2, wherein the first image represents biometrical data, such as a photograph, fingerprint or iris scan, of a user of the authentication device.

4. A system (600) as claimed in claim 1, wherein the second image is a two color-value image; the distinct rotation values being 0° and 90° and the inspection device (610) being operative to enable inspection of the second image by passing polarized light through the optical layer (622) and a polarization filter; or the distinct rotation values being 0° and 45° and the inspection device (610) being operative to enable inspection of the second image by passing light through a polarization filter and through the optical layer (622) onto a reflective layer.

5. A system (600) as claimed in claim 4, wherein first image is a two color-value image and the rotation value is adjusted approximately plus or minus 30°.

6. A system (600) as claimed in any one of the preceding claims, wherein for each authentication device the encryption is under control of a unique encryption key associated with the authentication device (610); the system including a storage (650) for storing for each authentication device the associated encryption key; the inspection device being operative to retrieve for each authentication device the associated encryption key from the storage (650).

7. A system (600) as claimed in claim 6, wherein for each authentication device (620) the respective second image includes information identifying the respective unique encryption key.

8. A system (600) as claimed in claim 7, wherein the inspection device (610) includes an LCD layer with a plurality of LCD cells arranged to co-operate with the cells of the optical layer (622); the inspection device (610) being operative to set each cell of the LCD according to a rotation prescribed by the encryption key for a corresponding cell of the area.

**9.** A system (600) as claimed in any one of the preceding claims, wherein the inspection device (610) includes:

an input device (1010) for loading the encrypted first image; and
a processor for, under control of a program, loading the decryption key and decrypting the loaded encrypted first image for subsequent rendering of the decrypted first image on a display (1050).

**10.** A system (600) as claimed in claim 9, wherein the rotation value is adjusted less than 10° modulo 90°.

**11.** A system (600) as claimed in any one of the preceding claims, wherein the second and first image are linked by a verifiable association.

**12.** A system (600) as claimed in claim 11, wherein the link is based on an identity of a user of the authentication device (620).

**13.** A system (600) as claimed in any one of the preceding claims, wherein the second image represents readable information, such as name, user identity number, or identity number of the authentication device, that is associated with an identity of the user.

**14.** An optical authentication device (620) for use in an authentication system as claimed in claim 1, the optical authentication device (620) including an optical layer, said optical layer including:

a representation of a first image visually encrypted under control of an encryption key, where the encrypted first image uniquely identifies the authentication device and
a plurality of polarized cells representing a second image;

**characterized in that**
for each cell of the optical layer (622) the rotation is determined by: assigning the corresponding pixel of the second image a distinct rotation value depending on an intensity of the pixel; and adjusting the rotation value with a positive or negative rotation depending on a pixel value of first image and the encryption key, such that the second image can still be visualized by means of a normal polarizer whereas the first image can only be retrieved by applying the encryption key.

**15.** A method of hiding a first image in a second image in an optical layer (622) of an optical authentication device (620) where the optical layer (622) includes a plurality of polarized cells; the method including the step of

obtaining a visual encryption key that describes for each cell of the area a respective rotation of a polarization of light;

**characterised in that** it further includes the steps of:

visually encrypting the first image into the second image by, for each cell of the optical layer (622), determining a respective rotation of a polarization of light passing through the cell in dependence on a pixel value of a corresponding pixel of the second image, and adjusting the rotation depending on a pixel value of a corresponding pixel of the first image and a rotation prescribed by the encryption key for the cell such that the second image can still be visualized by means of a normal polarizer whereas the first image can only be retrieved by applying the encryption key; the encrypted first image uniquely identifying the optical authentication device (620); and applying the determined rotations to the respective cells of the optical layer (622).

**Patentansprüche**

**1.** Authentifizierungssystem (600) mit einer Anzahl optischer Authentifizierungsanordnungen (620, 630, 640) und wenigstens einer Inspektionsanordnung (610);
wobei die Inspektionsanordnung (610) wirksam ist
zum Entschlüsseln der optischen Schicht (622, 632, 642) der optischen Authentifizierungsanordnung (620, 630, 640) unter Ansteuerung eines entsprechenden Verschlüsselungsschlüssels und folglich zum Visualisieren eines ersten Bildes um eine Verifikation einer einzigartigen Identifikation der Authentifizierungsanordnung (620, 630, 640) zu ermöglichen, und

zum Anwenden einer Polarisation auf die optische Schicht (622, 632, 642) um die Darstellung eines zweiten Bildes sichtbar zu machen, wobei das erste Bild nur nach einer sichtbaren Entschlüsselung sichtbar ist, wobei das Authentifizierungssystem (600) **dadurch**
**gekennzeichnet, dass**

jede optische Authentifizierungsanordnung (620, 630, 640) eine optischen Schicht (622, 632, 642) aufweist, die Folgendes umfasst:

- eine Darstellung eines ersten Bildes, das unter Ansteuerung eines Verschlüsselungsschlüssels sichtbar entschlüsselt worden ist, wobei das verschlüsselte erste Bild einzigartig die betreffende Authentifizierungsanordnung (620, 630, 640) identifiziert, und
- eine Anzahl polarisierter Zellen, die ein zweites Bild darstellen;

wobei für jede Zelle der optischen Schicht (622, 632, 642) die Drehung bestimmt wird durch:

Zuordnung eines bestimmten Drehungswertes zu dem entsprechenden Pixel des zweiten Bildes, und zwar abhängig von einer Intensität des Pixels; und
Einstellung des Drehungswertes mit einer positiven oder negativen Drehung, abhängig von einem Pixelwert des ersten Bildes und von dem Verschlüsselungsschlüssel, und zwar derart, dass das zweite Bild dennoch mit Hilfe eines normalen Polarisators sichtbar sein kann, während das erste Bild nur durch Anwendung des Verschlüsselungsschlüssels erfasst werden kann.

2. System (600) nach Anspruch 1, wobei das erste Bild für die optische Authentifizierungsanordnung (620) und/oder den Benutzer der Authentifizierungsanordnung (620) einzigartig ist.

3. System (600) nach Anspruch 2, wobei das erste Bild biometrische Daten, wie eine Fotographie, einen Fingerabdruck oder eine Irisabtastung eines Benutzers der Authentifizierungsanordnung darstellt.

4. System (600) nach Anspruch 1, wobei das zweite Bild ein Zweifarbwertebild ist; wobei die jeweiligen Drehungswerte 0° und 90° sind und die Inspektionsanordnung (610) wirksam ist um eine Inspektion des zweiten Bildes zu ermöglichen, und zwar **dadurch**, dass polarisiertes Licht durch die optische Schicht (622) und ein Polarisationsfilter geschickt wird; oder dass die jeweiligen Rotationswerte 0° und 45° sind und die Inspektionsanordnung (610) wirksam ist um eine Inspektion des zweiten Bildes zu ermöglichen, und zwar **dadurch**, dass Licht durch ein Polarisationsfilter und durch die optische Schicht (622) auf eine reflektierende Schicht geschickt wird.

5. System (600) nach Anspruch 4, wobei das erste Bild ein Zweifarbwertebild ist und der Drehungswert ungefähr plus oder minus 30° eingestellt wird.

6. System (600) nach einem der vorstehenden Ansprüche, wobei für jede Authentifizierungsanordnung die Verschlüsselung unter Ansteuerung eines einzigartigen Verschlüsselungsschlüssels, assoziiert mit der Authentifizierungsanordnung (610) erfolgt;
wobei das System einen Speicher (650) aufweist um für jede Authentifizierungsanordnung den assoziierten Verschlüsselungsschlüssel zu speichern; wobei die Inspektionsanordnung wirksam ist um für jede Authentifizierungsanordnung den assoziierten Verschlüsselungsschlüssel aus dem Speicher (650) zu erfassen.

7. System (600) nach Anspruch 6, wobei für jede Authentifizierungsanordnung (620) das betreffende zweite Bild Information enthält, die den betreffenden einzigartigen Verschlüsselungsschlüssel identifiziert.

8. System (600) nach Anspruch 7, wobei die Inspektionsanordnung (610) eine LCD Schicht mit einer Anzahl LCD Zellen umfasst, die derart gegliedert sind, dass sie mit den Zellen der optischen Schicht (622) zusammenarbeiten; wobei die Inspektionsanordnung (610) wirksam ist um jede Zelle der LCD entsprechend einer Drehung, vorgeschrieben durch den Verschlüsselungsschlüssel für eine entsprechende Zelle des Gebietes einzustellen.

9. System (600) nach einem der vorstehenden Ansprüche, wobei die Inspektionsanordnung (610) Folgendes umfasst:

- eine Eingangsanordnung (1010) zum Laden des verschlüsselten ersten Bildes; und
- einen Prozessor um unter Ansteuerung eines Programms den Entschlüsselungsschlüssel zu laden und das geladene verschlüsselte erste Bild zur nachfolgenden Erfassung des entschlüsselten ersten Bildes an einer Wiedergabeanordnung (1050) zu entschlüsseln.

10. System (600) nach Anspruch 9, wobei der Rotationswert auf weniger als 10° modulo 90° eingestellt wird.

11. System (600) nach einem der vorstehenden Ansprüche, wobei das zweite und das erste Bild durch eine nachprüfbare Assoziation gekoppelt sind.

12. System (600) nach Anspruch 11, wobei die Kopplung auf einer Identität eines Benutzers der Authentifizierungsanordnung (620) basiert.

13. System (600) nach einem der vorstehenden Ansprüche, wobei das zweite Bild auslesbare Information darstellt, wie einen Namen, eine ID-Nummer des Benutzers, oder eine ID-Nummer der Authentifizierungsanordnung, die mit der Identität des Benutzers assoziiert ist.

14. Optische Authentifizierungsanordnung (620) zur Verwendung in einem Authentifizierungssystem nach Anspruch 1, wobei die optische Authentifizierungsanordnung (620) eine optische Schicht aufweist, wobei die genannte optische Schicht Folgendes umfasst:

   - eine Darstellung eines ersten Bildes, das sichtbar verschlüsselt ist, und zwar unter Ansteuerung eines Verschlüsselungsschlüssels, wobei das verschlüsselte erste Bild einzigartig die Authentifizierungsanordnung identifiziert, und
   - eine Anzahl polarisierter Zellen die ein zweites Bild darstellen; **dadurch gekennzeichnet, dass** für jede Zelle der optischen Schicht (622) die Rotation bestimmt wird, und zwar **dadurch**, dass dem entsprechenden Pixel des zweiten Bildes ein bestimmter Rotationswert zugeordnet wird, und zwar abhängig von der Intensität des Pixels; und **dadurch**, dass der Rotationswert mit einer positiven oder negativen Rotation eingestellt wird, und zwar je nach dem Pixelwert des ersten Bildes und dem Verschlüsselungsschlüssel, so dass das zweite Bild dennoch mit Hilfe eines normalen Polarisators visualisiert werden kann, während das erste Bild nur durch Anwendung des Verschlüsselungsschlüssels erfasst werden kann.

15. Verfahren zum Verstecken eines ersten Bildes in einem zweiten Bild in einer optischen Schicht (622) einer optischen Authentifizierungsanordnung (620), wobei die optische Schicht (622) eine Anzahl polarisierter Zellen umfasst, wobei das Verfahren den nachfolgenden Verfahrensschritt umfasst:

   - das Erhalten eines sichtbaren Verschlüsselungsschlüssels, der für jede Zelle des Gebietes eine betreffende Rotation einer Polarisation des Lichtes beschreibt,

   **dadurch gekennzeichnet, dass** das Verfahren weiterhin die nachfolgenden Verfahrensschritte umfasst:

   - das sichtbare Verschlüsseln des ersten Bildes in das zweite Bild, und zwar **dadurch**, dass für jede Zelle der optischen Schicht (622) eine betreffende Rotation einer Polarisation von Licht bestimmt wird, das durch die Zelle geht, und zwar in Abhängigkeit von einem Pixelwert eines entsprechenden Pixels des zweiten Bildes, und durch Einstellung der Rotation in Abhängigkeit von einem Pixelwert eines entsprechenden Pixels des ersten Bildes und einer von dem Verschlüsselungsschlüssel für die Zelle vorgeschriebenen Rotation, so dass das zweite Bild dennoch mit Hilfe eines normalen Polarisators visualisiert werden kann, während das erste Bild nur durch Anwendung des Verschlüsselungsschlüssels erfasst werden kann, wobei das verschlüsselte erste Bild einzigartig die optische Authentifizierungsanordnung (620) identifiziert, und
   - das Anwenden der bestimmten Rotationen auf die betreffenden Zellen der optischen Schicht (622).

## Revendications

1. Système d'authentification (600) comprenant une pluralité de dispositifs d'authentification optiques (620, 630, 640) et au moins un dispositif d'inspection (610);
   le dispositif d'inspection (610) étant à même:

   de décrypter la couche optique (622, 632, 642) du dispositif d'authentification optique (620, 630, 640) sous la commande d'une clé de cryptage correspondante et ainsi de visualiser une première image afin de permettre la vérification d'une identification unique du dispositif d'authentification (620, 630, 640) et
   d'appliquer une polarisation à la couche optique (622, 632, 642) afin de permettre l'observation de la représentation d'une seconde image, la première image n'étant visible qu'après un décryptage visuel, le système d'authentification (600) étant **caractérisé en ce que**

chaque dispositif d'authentification optique (620, 630, 640) comprend une couche optique (622, 632, 642) comprenant:

une représentation d'une première image cryptée visuellement sous la commande d'une clé de cryptage, sachant que la première image cryptée identifie de manière unique le dispositif d'authentification (620, 630, 640) respectif et
une pluralité de cellules polarisées représentant une seconde image;

dans lequel, pour chaque cellule de la couche optique (622, 632, 642), la rotation est déterminée: en attribuant au pixel correspondant de la seconde image une valeur de rotation distincte dépendant d'une intensité du pixel; et en réglant la valeur de rotation avec une rotation positive ou négative en fonction d'une valeur de pixel de la première image et de la clé de cryptage, de sorte que la seconde image peut encore être visualisée au moyen d'un polariseur normal tandis que la première image ne peut être récupérée qu'en appliquant la clé de cryptage.

2. Système (600) suivant la revendication 1, dans lequel la première image est unique pour le dispositif d'authentification optique (620) et/ou l'utilisateur du dispositif d'authentification (620).

3. Système (600) suivant la revendication 2, dans lequel la première image représente des données biométriques, telles qu'une photographie, une empreinte digitale ou un balayage d'iris, d'un utilisateur du dispositif d'authentification.

4. Système (600) suivant la revendication 1, dans lequel la seconde image est une image à deux valeurs de couleur; les valeurs de rotation distinctes étant de 0° et de 90° et le dispositif d'inspection (610) étant à même de permettre l'inspection de la seconde image en laissant passer de la lumière polarisée à travers la couche optique (622) et un filtre de polarisation; ou les valeurs de rotation distinctes étant de 0° et de 45° et le dispositif d'inspection (610) étant à même de permettre une inspection de la seconde image en laissant passer de la lumière à travers un filtre de polarisation et à travers la couche optique (622) sur une couche réfléchissante.

5. Système (600) suivant la revendication 4, dans lequel la première image est une image à deux valeurs de couleur et la valeur de rotation est réglée approximativement sur plus ou moins 30°.

6. Système (600) suivant l'une quelconque des revendications précédentes, dans lequel, pour chaque dispositif d'authentification, le cryptage est sous la commande d'une clé de cryptage unique associée au dispositif d'authentification (610); le système comprenant une unité de stockage (650) destinée à stocker, pour chaque dispositif d'authentification, la clé de cryptage associée; le dispositif d'inspection étant à même de récupérer, pour chaque dispositif d'authentification, la clé de cryptage associée à partir de l'unité de stockage (650).

7. Système (600) suivant la revendication 6, dans lequel, pour chaque dispositif d'authentification (620), la seconde image respective comprend des informations identifiant la clé de cryptage unique respective.

8. Système (600) suivant la revendication 7, dans lequel le dispositif d'inspection (610) comprend une couche LCD avec une pluralité de cellules LCD agencées de manière à coopérer avec les cellules de la couche optique (622); le dispositif d'inspection (610) étant à même de positionner chaque cellule du LCD selon une rotation prescrite par la clé de cryptage pour une cellule correspondante de la zone.

9. Système (600) suivant l'une quelconque des revendications précédentes, dans lequel le dispositif d'inspection (610) comprend:

un dispositif d'entrée (1010) pour charger la première image cryptée; et
un processeur pour, sous la commande d'un programme, charger la clé de décryptage et décrypter la première image cryptée chargée en vue d'un rendu ultérieur de la première image décryptée sur un affichage (1050).

10. Système (600) suivant la revendication 9, dans lequel la valeur de rotation est réglée sur moins de 10° modulo 90°.

11. Système (600) suivant l'une quelconque des revendications précédentes, dans lequel la seconde et la première image sont liées par une association vérifiable.

**12.** Système (600) suivant la revendication 11, dans lequel la liaison est basée sur une identité d'un utilisateur du dispositif d'authentification (620).

**13.** Système (600) suivant l'une quelconque des revendications précédentes, dans lequel la seconde image représente des informations lisibles, telles que le nom, le numéro d'identité de l'utilisateur ou le numéro d'identité du dispositif d'authentification, qui est associé à une identité de l'utilisateur.

**14.** Dispositif d'authentification optique (620) destiné à être utilisé dans un système d'authentification suivant la revendication 1, le dispositif d'authentification optique (620) comprenant une couche optique, ladite couche optique comprenant:

une représentation d'une première image cryptée visuellement sous la commande d'une clé de cryptage, la première image cryptée identifiant d'une manière unique le dispositif d'authentification, et
une pluralité de cellules polarisées représentant une seconde image;

**caractérisé en ce que**, pour chaque cellule de la couche optique (622), la rotation est déterminée par: l'attribution au pixel correspondant de la seconde image d'une valeur de rotation distincte dépendant d'une intensité du pixel; et le réglage de la valeur de rotation selon une rotation positive ou négative dépendant d'une valeur de pixel de la première image et de la clé de cryptage, de sorte que la seconde image peut encore être visualisée au moyen d'un polariseur normal tandis que la première image ne peut être récupérée qu'en appliquant la clé de cryptage.

**15.** Procédé pour masquer ou cacher une première image dans une seconde image dans une couche optique (622) d'un dispositif d'authentification optique (620), sachant que la couche optique (622) comprend une pluralité de cellules polarisées; le procédé comprenant les étapes suivantes:

obtenir une clé de cryptage visuel qui décrit, pour chaque cellule de la zone, une rotation respective d'une polarisation de lumière;

**caractérisé en ce qu'**il comprend en outre les étapes suivantes:

le cryptage visuel de la première image dans la seconde image en déterminant, pour chaque cellule de la couche optique (622), une rotation respective d'une polarisation de lumière traversant la cellule en fonction d'une valeur de pixel d'un pixel correspondant de la seconde image, et le réglage de la rotation en fonction d'une valeur de pixel d'un pixel correspondant de la première image et d'une rotation prescrite par la clé de cryptage pour la cellule de sorte que la seconde image peut encore être visualisée au moyen d'un polariseur normal tandis que la première image ne peut être récupérée qu'en appliquant la clé de cryptage; la première image cryptée identifiant le dispositif d'authentification optique (620) d'une manière unique; et
l'application des rotations déterminées aux cellules respectives de la couche optique (622).

**FIG.1**

**FIG.2**

**FIG.3**

FIG.4A

FIG.4B

FIG.4C

FIG.5

FIG. 6

FIG. 7

FIG. 10

FIG.8A

FIG.8B

| 30⁰ | -30⁰ | -30⁰ |
|------|------|------|
| -30⁰ | 30⁰ | 30⁰ |
| 30⁰ | -30⁰ | -30⁰ |

FIG.8C

| -30⁰ | 60⁰ | 120⁰ |
|------|-----|------|
| -30⁰ | 30⁰ | 60⁰ |
| 30⁰ | 60⁰ | 60⁰ |

FIG.8D

FIG.8E

FIG.8F

FIG.9A

FIG.9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1120737 A
- EP 02075527 A
- WO 03067797 A

### Non-patent literature cited in the description

- Visual Cryptology, Eurocrypt '94. **M. NAOR ; A. SHAMIR.** LNCS. Springer-Verlag, 1995, vol. 950, I-12